# EUROPEAN PATENT APPLICATION

(11) **EP 3 866 114 A1**
(43) Date of publication of application: **18.08.2021**
(21) Application number: 21156358.0
(22) Date of filing: 10.02.2021
(51) Int. Cl.: G06T 7/73

(54) **SYSTEM AND METHOD FOR LOCKING AUGMENTED AND MIXED REALITY APPLICATIONS TO MANUFACTURING HARDWARE**

(30) Priority: 10.02.2020 US 202016786039
(71) Applicant: B/E Aerospace, Inc., Winston Salem, NC 27105 (US)
(72) Inventor: SAHU, Parimal, 500046 Hyderabad, Telangana (IN); BALFOUR, David, Greensboro, NC 27410 (US)
(74) Representative: Dehns

(57) **Abstract**

In embodiments, an augmented reality (AR) system includes a target structure (116) and an augmented reality tracking assembly (118) including tracking markers (122) and a mounting bracket (120) configured to couple the tracking markers to the target structure in a known position and orientation. In embodiments, the AR system further includes a user device (102) including an imaging device (110), a display device (112), and a controller (104). In embodiments, the controller of the user device is configured to: receive images of the target structure and tracking markers from the imaging device; determine a real-world coordinate system of the target structure based on a position of the tracking markers within the acquired images; generate virtual overlay images with a virtual coordinate system which is aligned with the real-world coordinate system; generate augmented reality images comprising the real-world images overlaid with the virtual overlay images; and display the augmented reality images on the display device.

## Description

### BACKGROUND

Manufacturing, assembling, repairing, and maintaining complex equipment and machinery may entail hundreds or thousands of steps. One technique which has been developed to facilitate these efforts is the use of augmented reality (AR). Augmented reality overlays real-world images/components with a three-dimensional (3D) real-time visualization. In theory, the 3D visualization should perfectly correspond and overlay on the underlying real-world images. However, conventional AR applications have struggled to accurately and reliably overlay real-world images with AR overlays. Therefore, there exists a need in the art for a system and method which cure one or more of the shortfalls of the previous approaches identified above.

### SUMMARY

An augmented reality (AR) system is disclosed. The AR system includes a target structure and at least one augmented reality tracking assembly including one or more tracking markers and a mounting bracket configured to couple the one or more tracking markers to the target structure in a known position and orientation. In embodiments, the AR system further includes a user device including an imaging device configured to acquire one or more images of the target structure and the one or more tracking markers, a display device configured to display images to a user, and a controller. In embodiments, the controller of the user device is configured to: receive the one or more acquired images from the imaging device; determine a real-world coordinate system of the target structure based on a position of the one or more tracking markers within the one or more acquired images; generate one or more virtual overlay images with a virtual coordinate system which is aligned with the real-world coordinate system; generate one or more augmented reality images comprising the one or more real-world images overlaid with the one or more virtual overlay images; and display the one or more augmented reality images on the display device.

In some embodiments of the AR system, the controller is configured to determine the real-world coordinate system of the target structure by retrieving three-dimensional (3D) design data of the target structure from memory, and determining a position and an orientation of the 3D design data of the target structure based on an orientation of the one or more tracking markers.

In some embodiments of the AR system, the controller is configured to determine the position and orientation of the 3D design data of the target structure based on an orientation of the one or more tracking markers with respect to an orientation of one or more components of the target structure.

In some embodiments of the AR system, the 3D design data of the target structure includes 3D design data of the one or more tracking markers coupled to the target structure.

In some embodiments of the AR system, the real-world coordinate system and the virtual coordinate system each include three-dimensional (3D) coordinate systems.

In some embodiments of the AR system, the one or more images acquired by the imaging device include a video stream acquired over a time interval, and wherein the one or more augmented reality images displayed on the display device include an augmented reality video stream displayed over the time interval.

In some embodiments of the AR system, the user device includes at least one of a smartphone, tablet, or head-mounted device (HMD).

In some embodiments of the AR system, the target structure includes an aircraft seat.

In some embodiments of the AR system, the one or more virtual overlay images are configured to display information associated with the target structure.

In some embodiments of the AR system, the one or more virtual overlay images include a set of work instructions associated with the target structure.

In some embodiments of the AR system, the controller is further configured to: receive one or more user commands; and generate one or more control signals configured to selectively modify the set of work instructions displayed on the display device.

In some embodiments of the AR system, the one or more user commands include at least one of a voice command, a user command input via a user input device, or a hand gesture captured by the imaging device.

In some embodiments of the AR system, determining a real-world coordinate system of the target structure based on the position of the one or more tracking images includes: receiving a plurality of images of the target structure and one or more tracking markers over a time interval; determining a plurality of real-world coordinate systems of the target structure throughout the time interval based on the plurality of images; and determining an average of the plurality of real-world coordinate systems to generate the real-world coordinate system of the target structure over the time interval.

In some embodiments of the AR system, the controller is further configured to: determine an identity of the target structure based on the one or more tracking markers within the one or more acquired images.

A method for displaying augmented reality (AR) images on a user device is disclosed. The method includes: acquiring one or more images of a target structure and one or more tracking markers mounted to the target structure; determining a real-world coordinate system of the target structure based on a position of the one or more tracking markers within the one or more acquired images; generating one or more virtual overlay images with a virtual coordinate system which is aligned with the real-world coordinate system; generating one or more augmented reality images comprising the one or more real-world images overlaid with the one or more virtual overlay images; and displaying the one or more augmented reality images on the display device.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are provided for example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates an augmented reality (AR) system, in accordance with one or more embodiments of the present disclosure.
FIG. 2 illustrates an augmented reality (AR) tracking assembly, in accordance with one or more embodiments of the present disclosure.
FIG. 3A is a rear elevation view of a mounting bracket of an augmented reality (AR) tracking assembly, in accordance with one or more embodiments of the present disclosure.
FIG. 3B is a front elevation view of a mounting bracket of an augmented reality (AR) tracking assembly, in accordance with one or more embodiments of the present disclosure.
FIG. 4 illustrates a user device of an augmented reality (AR) system, in accordance with one or more embodiments of the present disclosure.
FIG. 5 illustrates a flowchart of a method for operating an augmented reality (AR) system, in accordance with one or more embodiments of the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1 a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

Manufacturing, assembling, repairing, and maintaining complex equipment and machinery may entail hundreds or thousands of steps. One technique which has been developed to facilitate these efforts is the use of augmented reality (AR). Augmented reality overlays real-world images/components with a three-dimensional (3D) real-time visualization. In theory, the 3D visualization should perfectly correspond and overlay on the underlying real-world images. However, conventional AR applications have struggled to accurately and reliably overlay real-world images with AR overlays. IN particular, conventional AR applications have utilized reference "cues" which result in AR overlays being generated at the wrong scale, position, and/or orientation with respect to the underlying real-world images. Furthermore, conventional AR applications have been unable to adapt to inconsistencies between products, leading to inaccurate AR overlays.

Accordingly, embodiments of the present disclosure are directed to a system and method which cure one or more of the shortfalls of the previous approaches identified above. Embodiments of the present disclosure are directed to an AR system which utilizes AR tracking assemblies mounted to target structures in known spatial arrangements in order to overlay AR images on top of real-world images. Additional embodiments of the present disclosure are directed to an AR system which utilizes 3D design data of target structures and/or AR tracking assemblies to generate AR overlays.

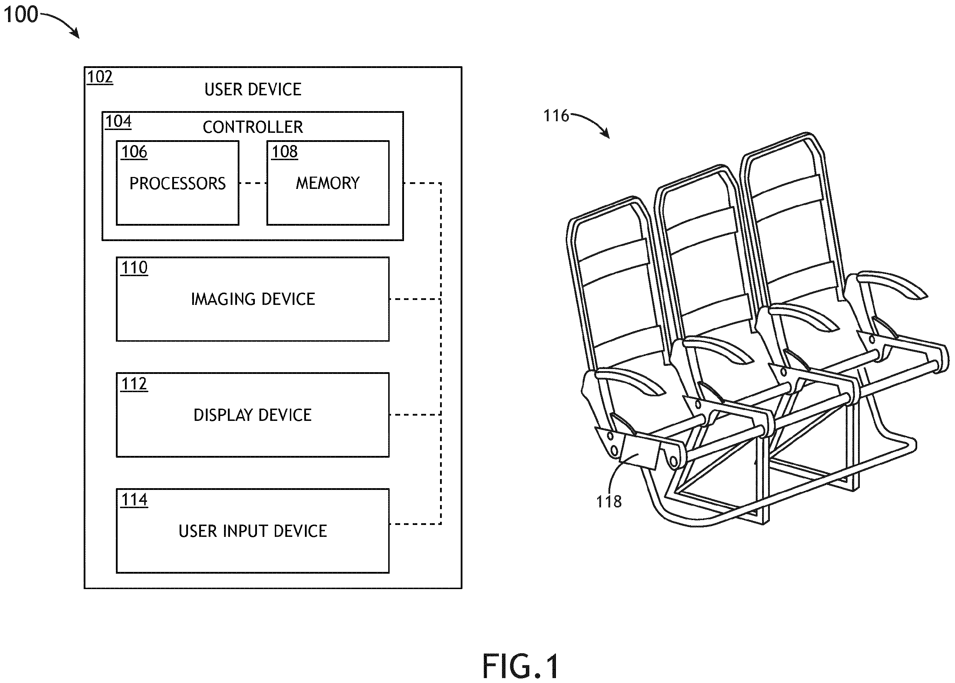

FIG. 1 illustrates an augmented reality (AR) system 100, in accordance with one or more embodiments of the present disclosure. In embodiments, the AR system 100 may include, but is not limited to, a user device 102, a target structure 116, and one or more AR tracking assemblies 118.

In embodiments, the target structure 116 may include any structure, product, or machinery which may benefit from AR applications. For example, as shown in FIG. 1, the target structure 116 may include an aircraft seat. By way of another example, the target structure 116 may include, but is not limited to, aircraft or aircraft components (e.g., aircraft evacuation slides), vehicles or vehicle components, manufacturing equipment, farming equipment, HVAC equipment, computers, and the like. It is contemplated herein that the target structure 116 may include a product or machine which include many components and/or requires many steps to maintain, assemble, or repair the target structure 116. For example, the aircraft seat (target structure 116) illustrated in FIG. 1 may include miles of wiring, and hundreds of metal components and carbon fiber sheets. Accordingly, the aircraft seat may require hundreds of fabrication steps which must be completed in a specific order to properly fabricate the aircraft seat. In this example, the steps required to properly fabricate the aircraft seat may be detailed in a set of work instructions. As will be described in further detail herein, embodiments of the present disclosure may be directed to the AR system 100 which is configured to generate AR overlays in order to facilitate compliance with the work instructions of the aircraft seat (e.g., target structure 116).

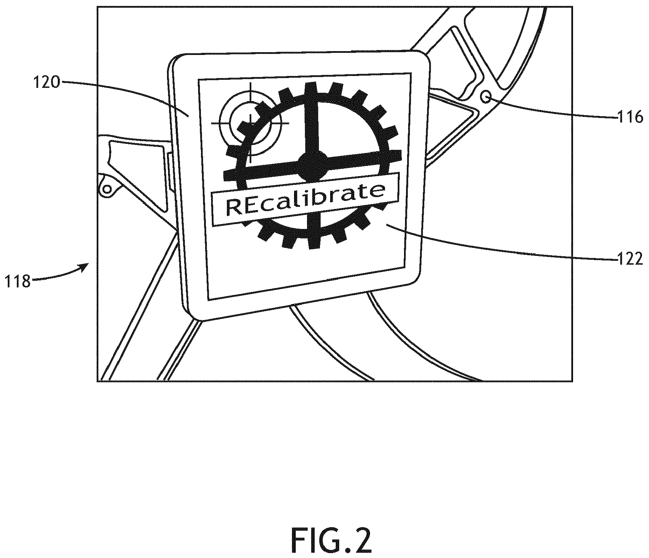

In embodiments, the AR system 100 may include one or more AR tracking assemblies 118. For example, as shown in FIG. 1, the target structure 116 may include one or more AR tracking assemblies 118 disposed on the target structure 116. The AR tracking assemblies 118 may be further shown and described with reference to FIG. 2.

FIG. 2 illustrates an augmented reality (AR) tracking assembly 118, in accordance with one or more embodiments of the present disclosure.

As shown in FIG. 2, an AR tracking assembly 118 may be disposed on (e.g., coupled to) the target structure 116. The target structure 116 may include any number of AR tracking assemblies 118. In embodiments, the AR tracking assembly 118 includes a mounting bracket 120 and one or more tracking markers 122 disposed on the mounting bracket 120. The mounting bracket 120 may be configured to couple the one or more tracking markers 122 to the target structure in a known position and/or orientation.

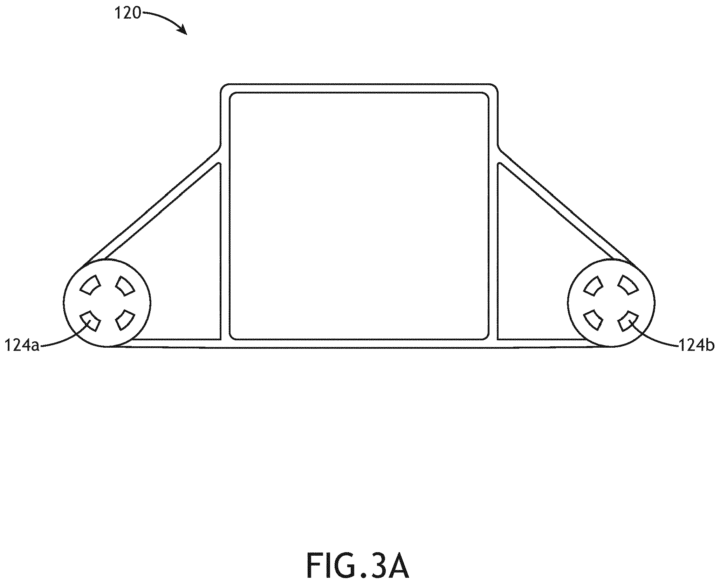

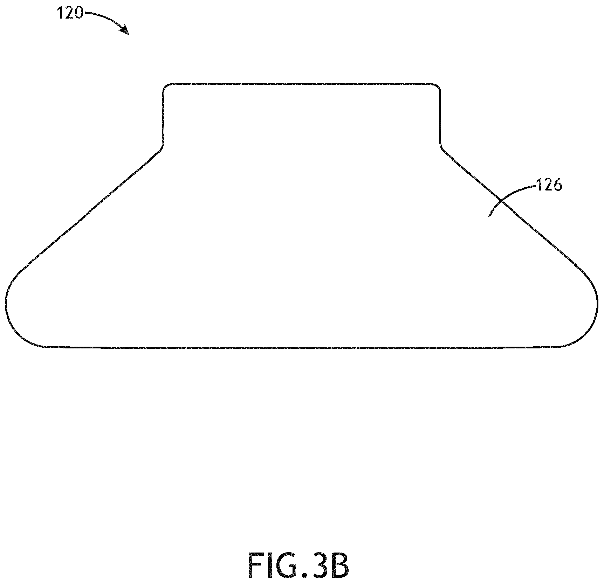

FIG. 3A is a rear elevation view of a mounting bracket 120 of an augmented reality (AR) tracking assembly 118, in accordance with one or more embodiments of the present disclosure. FIG. 3B is a front elevation view of a mounting bracket 120 of an augmented reality (AR) tracking assembly 118, in accordance with one or more embodiments of the present disclosure.

The mounting bracket 120 may include any mounting structure, bracket, or assembly known in the art which is configured to couple the one or more tracking markers 122 to the target structure 116 in a known position and orientation. For example, the mounting bracket 120 may be configured to mount a tracking marker 122 to the target structure in a fixed position and orientation such that the position and orientation of the tracking marker 122 is stationary and known with respect to the target structure 116. In embodiments, the tracking markers 122 may include any image or structure known in the art to facilitate AR applications. For example, the tracking marker 122 may include a two-dimensional image including, but not limited to, a bar code, a QR code, a custom tracking image, and the like.

In embodiments, the mounting bracket 120 may include one or more coupling assemblies 124a, 124b configured to couple the mounting bracket 120 to the target structure 116. The one or more coupling assemblies 124a, 124b may be configured to be coupled to the target structure 116 using any techniques known in the art including, but not limited to, adhesives, mechanical fasteners (e.g., bolts, rivets, screws), frictional forces (e.g., snapping assemblies, tongue-and-groove assemblies), and the like. The mounting bracket 120 may further include one or more surfaces 126 upon which the one or more tracking markers 122 may be disposed. The mounting bracket 120 may be fabricated using any fabrication techniques known in the art including, but not limited to, casting, injection molding, 3D printing, and the like.

While the aircraft seat (e.g., target structure 116) illustrated in FIGS. 1 and 2 are shown as including only one AR tracking assembly 118, this is not to be regarded as a limitation of the present disclosure, unless noted otherwise herein. In this regard, a target structure 116 may include any number of AR tracking assemblies 118 coupled/affixed to the target structure 116 at varying positions and/or orientations. For example, the AR system 100 may include a first AR tracking assembly 118a coupled to the target structure 116 at a first known position with a first known orientation, and an additional AR tracking assembly 118b coupled to the target structure 116 at an additional known position different from the first known position and an additional known orientation different from the first known orientation.

Reference will again be made to FIG. 1. In embodiments, the user device 102 may include, but is not limited to, a controller 104 including one or more processors 106 and memory 108, one or more imaging devices 110, a display device 112, and a user input device 114. The user device 102 may include any user device known in the art including, but not limited to, a smartphone, tablet, wearable device (e.g., smart watch), head-mounted device (HMD), and the like.

In embodiments, the one or more imaging devices 110 may be configured to acquire one or more images. For example, the one or more imaging devices 110 may be configured to acquire one or more images of the target structure 116 and/or AR tracking assemblies 118 (e.g., one or more tracking markers 122). The imaging devices 110 may include any imaging device known in the art configured to acquire images including, but not limited to, cameras, video cameras, ultra-violet (UV) imaging devices, infra-red (IR) imaging devices, and the like.

In embodiment, the display device 112 is configured to display images and/or video to a user. For example, the display device 112 may be configured to display images acquired by the imaging device 110 to a user. The display device 112 may include any display device known in the art including, but not limited to, a liquid crystal display (LCD), a light-emitting diode (LED) display, an organic light-emitting diode (OLED) display, a CRT display, a quantum dot display, a touchscreen display, and the like. In embodiments, the user input device 114 may be configured to receive input commands from a user. The user input device 114 may include any user input device known in the art including, but not limited to, touchscreens, scroll wheels, knobs, levers, switches, and the like.

In embodiments, the one or more processors 106 of the controller 104 may be configured to execute a set of program instructions stored in memory 108, the set of program instructions configured to cause the one or more processors 106 to carry out the various steps/functions of the present disclosure. For example, the one or more processors 106 of the controller 104 may be configured to: receive one or more images acquired from/by the imaging device 110; determine a real-world coordinate system of the target structure 116 based on a position of the one or more tracking markers 122 within the one or more acquired images; generate one or more virtual overlay images with a virtual coordinate system which is aligned with the real-world coordinate system; generate one or more augmented reality images comprising the one or more real-world images overlaid with the one or more virtual overlay images; and display the one or more augmented reality images on the display device 112. Each of these steps/functions carried out by the controller 104 will be discussed in further detail herein.

In embodiments, the controller 104 is configured to receive one or more images acquired from/by the imaging device 110. For example, the controller 104 may be configured to generate one or more control commands configured to cause the imaging device 110 to acquire one or more images of the target structure 116 and/or AR tracking assembly 118. Upon identifying the one or more tracking markers 122 of the tracking assembly 118 in the acquired images, the controller 104 may be configured to "lock on" to the tracking markers 122 in that it may direct the imaging device 110 to regularly and/or consistently acquire images of the tracking markers 122. The controller 104 may then receive the images acquired by the imaging device 110, and store the images in memory 108.

In additional and/or alternative embodiments, the controller 104 may be configured to cause the display device 112 to display the one or more acquired images. For example, in the context of a video stream, the imaging device 110 may be configured to acquire a set of images over a time interval (e.g., video stream), and the controller 104 may be configured to cause the display device 112 to display the set of images such that the images are displayed on the display device 112 in real time or near-real time.

In some embodiments, the AR system 100 may be configured to store in memory 108 data associated with the target structure 116, AR tracking assembly 118, and/or tracking markers 122. For example, a tracking marker 122 associated with an aircraft seat (e.g., target structure 116) may be stored in memory 108 such that the controller 104 is configured to recognize distinct tracking markers 122 from other images and/or other tracking markers. In this regard, information associated with the tracking markers 122 and/or the target structures 116 to which they are affixed may be stored in memory 108 and retrieved by the controller 104. For instance, an association between the tracking marker 122 and the aircraft seat (e.g., target structure 116) to which it is affixed may be stored in memory 108, such that the controller 104 may be configured to identify the tracking marker 122 in acquired images, and determine an identity of the target structure 116 (aircraft seat) based on the identified tracking marker 122.

Additional data associated with AR tracking assemblies 118 and/or target structures 116 which may be stored in memory 108 may further include three-dimensional (3D) design data (e.g., 3D engineering data) and other manufacturing data of the target structure 116 and/or AR tracking assemblies 118. For example, 3D design data used to fabricate the aircraft seat (target structure 116) may be stored in memory 108 such that it may be retrieved by the controller 104. Furthermore, because the AR tracking assembly 118 (e.g., tracking marker 122) may be coupled to the target structure 116 in a known position and orientation, the 3D design data of the target structure 116 may further include 3D design data of the AR tracking assembly 118 (tracking marker 122) coupled to the target structure 116. In this regard, upon identifying a tracking marker 122 and the associated target structure 116 to which the tracking marker 122 is affixed, the controller 104 may be configured to retrieve 3D design data which details the 3D features, components, position, and orientation of the target structure 116 and the AR tracking assembly 118 (tracking marker 122) relative to the target structure 116.

In embodiments, the controller 104 may be further configured to determine a real-world coordinate system of the target structure 116 based on a position of the one or more tracking markers 122 within the one or more acquired images. In some embodiments, the controller 104 may be configured to determine the real-world coordinate system of the target structure 116 based on a determined position and/or orientation of the imaged tracking markers 122. For example, the controller 104 may be configured to determine a known position and/or orientation of the tracking markers 122 relative to the user device 102 and/or target structure 116 based on the acquired images of the tracking marker 122. The position and/or orientation of the tracking markers 122 may be determined by the controller 104 based on a position and/or orientation of the tracking markers 122 relative to one or more components of the target structure 116. Accordingly, the controller 104 may be configured to determine the real-world coordinate system by identifying two or more consistent structural locations (e.g., tracking markers 122, components of the target structure 116) of the target structure 116.

In some embodiments, the controller 104 may be configured to determine the real-world coordinate system of the target structure 116 by retrieving 3D design data of the target structure 116 from memory 108, and determining a position and an orientation of the 3D design data of the target structure 116 based on an orientation of the one or more tracking markers 122. For example, after determining the position and orientation of the tracking markers 122, the controller 104 may reference 3D design data of the target structure 116 (which includes 3D design data of the AR tracking assembly) in order to determine the real-world coordinate system of the target structure 116 relative to the known position and orientation of the tracking markers 122.

As it is used herein, the term "real-world coordinate system" may be used to refer to a position and orientation of the target structure 116 in space. In this regard, the real-world coordinate system may include a 3D coordinate system describing the position/orientation of the target structure 116/AR tracking assembly 118 in space. In some embodiments, the real-world coordinate system of the target structure 116 may be defined relative to the user device 102. For example, the real-world coordinate system of the target structure 116 may be determined such that the position and orientation of the target structure 116, as imaged by the user device 102/imaging device 110, is known. In embodiments, the controller 104 may be configured to time-stamp the determined real-world coordinate system and store it in memory 108.

It is noted herein that the real-world coordinate system of the target structure 116 may be regularly and/or continuously updated based on images acquired over time. For example, as a user (e.g., user device 102) walks around an aircraft seat (target structure 116) the imaging device 110 may be configured to "lock on" to the tracking markers 122 in order to regularly/continually acquire images of the aircraft seat and tracking markers 122. In this example, the controller 104 may be configured to continually update the real-world coordinate system of the target structure 116 so that the real-world coordinate system accurately determines the position and/or orientation of the target structure 116 relative to the user device 102 over time.

It is contemplated herein that the AR system 100 of the present disclosure may be configured to mediate determined positions of the tracing markers 122 and/or target structure 116 from acquired images in order to mediate identified positions/orientations of the target structure 116 and enable the generation of more accurate AR overlays with tighter tolerances. For example, the controller 104 may be configured to receive a plurality of real-world images of the target structure 116 and/or tracking markers 122 over a given time interval. Subsequently, the controller 104 may be configured to determine a plurality of real-world coordinate systems of the target structure 116 throughout the time interval based on the plurality of images. Finally, the controller 104 may be configured to determine an average of the plurality of real-world coordinate systems over the given time interval in order to generate the real-world coordinate system of the target structure 116 over the time interval.

For instance, as a user views the target structure 116 over a period of one second, the imaging device 110 may acquire real-world images of the target structure 116 and the tracking marker 122 every tenth of a second (e.g., ten images over the one-second time interval). In this example, the controller 104 may be configured to generate a real-world coordinate system of the target structure 116 based on each of the ten images (e.g., ten real-world coordinate systems). Subsequently, the controller 104 may then be configured to average the ten real-world coordinate systems in order to generate a real-world coordinate system of the target structure 116 over the given time interval. This averaged real-world coordinate system may be used to represent the coordinate system of the target structure 116 for the entirety, or at least a portion, of the time interval.

While the previous example described determining a real-world coordinate system based on averages, it is contemplated herein that the controller 104 may utilize any mathematical formula or technique known in the art to generate a real-world coordinate system from a plurality of real-world coordinate systems including, but not limited to, averages, weighted averages, moving averages (MA), exponentially weighted moving averages (EWMA), linearly weighted moving averages (LWM), and the like.

In embodiments, after determining the real-world coordinate system of the target structure 116, the controller 104 may be configured to generate one or more virtual overlay images defined by a virtual coordinate system. The one or more virtual overlay images may be configured to display information associated with the target structure 116. In embodiments, the controller 104 may be configured to generate the virtual overlay images such that the virtual coordinate system is aligned with the real-world coordinate system. In this regard, the virtual coordinate system may also include a 3D coordinate system which corresponds (e.g., maps to, aligns with) the 3D coordinate system of the real-world coordinate system.

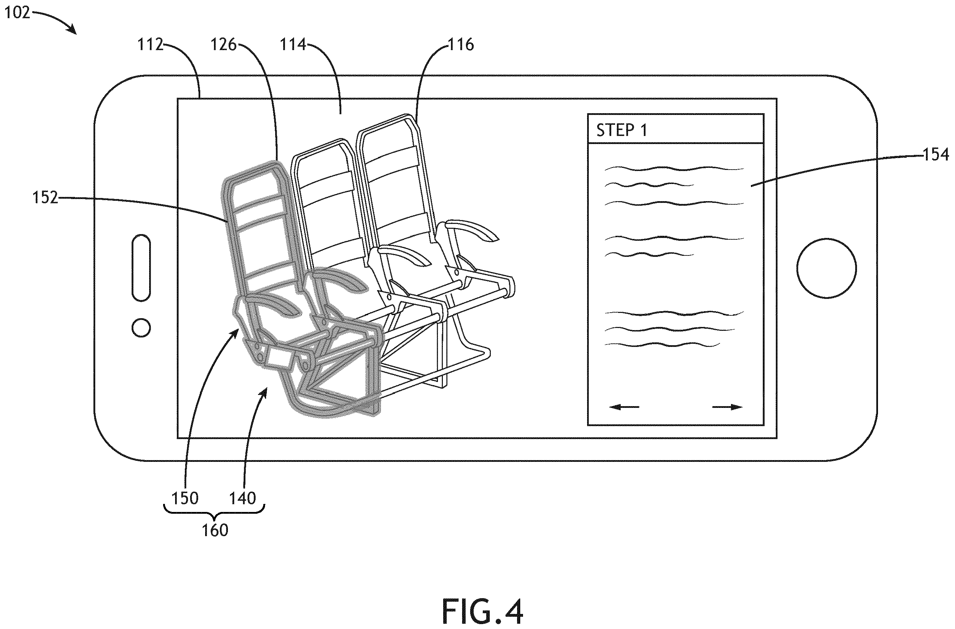

In embodiments, the controller 104 may be configured to generate one or more augmented reality (AR) images comprising the one or more real-world images overlaid with the one or more virtual overlay images. Subsequently, the controller 104 may be configured to display the one or more augmented reality images on the display device 112. This may be further understood with reference to FIG. 4.

FIG. 4 illustrates a user device 102 of an augmented reality (AR) system 100, in accordance with one or more embodiments of the present disclosure. As shown in FIG. 4, the user device 102 may include a smartphone or tablet with an integrated touchscreen display device 112/user input device 114.

In embodiments, the controller 104 may be configured to generate one or more AR images 160, and cause the display device 112 to display the AR images 160. In embodiments, the AR images 160 may include the one or more real-world images 140 overlaid with the one or more virtual overlay images 150. For example, as shown in FIG. 4, the controller 104 may be configured to cause the display device 112 to display the one or more AR images 160 including the virtual overlay images 140 and real-world images 150. In this regard, the controller 104 may be configured to cause the display device 112 to display the real-world images acquired by the imaging device 110 and the generated virtual overlay images simultaneously.

As noted previously herein, the controller 104 may be configured to cause the display device 112 to display one or more real-world images 140. For example, as shown in FIG. 4, the controller 104 may cause the display device 112 to display real-world images 140 of an aircraft seat (target structure 116). The real-world images 140 may be captured by the imaging device 110, and may be displayed via the display device 112 in real time and/or near-real time. Additionally, the controller 104 may be configured to cause the display device 112 to display one or more virtual overlay images 150. The virtual overlay images 150 may be overlaid on top of the real-world images 140. In some embodiments, the virtual overlay images 150 may be semi-transparent such that the real-world images 140 may still be seen through the virtual overlay images 150.

In embodiments, the one or more virtual overlay images 150 (and, hence, the AR images 160) are configured to display information associated with the target structure 116. For example, as shown in FIG. 4, the virtual overlay images 150 may include a virtual representation 152 of one or more components of the target structure 116. The virtual representation 152 of the target structure 116 within the virtual overlay images 150 may align with (e.g., may be overlaid on top of) the corresponding components of the target structure 116 within the real-world images 140, as shown in FIG. 4. It is contemplated herein that the virtual representation 152 of the target structure 116 may be used to highlight particular components or features of the target structure 116, which may draw a user's attention to the highlighted components.

In additional and/or alternative embodiments, the one or more virtual overlay images 150 (and, hence, the AR images 160) include a set of work instructions 154 associated with the target structure 116. For example, as shown in FIG. 4, the virtual overlay images 150/AR images 160 may include a set of work instructions 154 associated with the aircraft seat (target structure 116). The set of work instructions 154 may be stored in memory 108 and associated with the target structure 116 such that the controller 104 may be able to quickly and efficiently retrieve the set of work instructions 154 upon identifying the identity of the target structure 116.

The set of work instructions 154 may include any data associated with the target structure 116 including, but not limited to, assembly instructions (e.g., step-by-step instructions for assembling the target structure), maintenance instructions (e.g., step-by-step instructions for cleaning/servicing the target structure), troubleshooting instructions, maintenance history data, and the like. It is contemplated herein that displaying the set of work instructions 154 alongside the real-world images 140 and virtual overlay images 150 of the target structure 116 within the AR images 160 may provide a user with useful, understandable data to further understand the respective task at hand. The set of work instructions 154 may help a user better understand the construction of the target structure 116, and more easily follow along when performing a particular task on the target structure 116.

In some embodiments, the controller 104 may be configured to selectively modify the set of work instructions 154 displayed in the virtual overlay images 150/AR images 160 via the display device 112. Selectively modifying the set of work instructions 154 may include modifying the information displayed within the set of work instructions 154, flipping through step-by-step instructions of the work instructions 154, and the like.

In some embodiments, the controller 104 may be configured to selectively modify the set of work instructions 154 in response to user commands received from a user. User commands may include any user commands known in the art including, but not limited to, user commands received via the user input device 114 (e.g., swiping on a touchscreen, scrolling on a scroll wheel), voice commands, and the like. By way of another example, the user commands may include one or more motion commands (e.g., waiving a hand) captured by the imaging device 110.

For example, the set of work instructions 154 shown in FIG. 4 may include step-by-step instructions for assembling the aircraft seat (target structure 116). In order to move from one step to the next step (or to a previous step), the user may make one or more hand gestures (motion commands) which may be captured in one or more images by the imaging device 110. Upon identifying the one or more hand gestures in the acquired images, the controller 104 may be configured to generate one or more control signals configured to cause the set of work instructions 154 shown on the display device 112 to flip to the next step. It is contemplated herein that the controller 104 may be configured to recognize a plurality of user commands (e.g., voice commands, hand gestures), and may be further configured to selectively modify the set of work instructions 154 according to the identified user command (e.g., move forward one step, move backward one step, pull up a main menu).

It is noted herein that the one or more components of AR system 100 may be communicatively coupled to the various other components of AR system 100 in any manner known in the art. For example, the controller 104, imaging device 110, display device 112, and user input device 114 may be communicatively coupled to each other and other components via a wireline (e.g., copper wire, fiber optic cable, and the like) or wireless connection (e.g., RF coupling, IR coupling, data network communication, WiFi, WiMax, Bluetooth, 3G, 4G, 4G LTE, 5G and the like).

In one embodiment, the one or more processors 106 may include any one or more processing elements known in the art. In this sense, the one or more processors 106 may include any microprocessor-type device configured to execute software algorithms and/or instructions. In one embodiment, the one or more processors 106 may consist of a desktop computer, mainframe computer system, workstation, image computer, parallel processor, or other computer system (e.g., networked computer) configured to execute a program configured to operate the AR system 100, as described throughout the present disclosure. It should be recognized that the steps described throughout the present disclosure may be carried out by a single computer system or, alternatively, multiple computer systems. Furthermore, it should be recognized that the steps described throughout the present disclosure may be carried out on any one or more of the one or more processors 106. In general, the term "processor" may be broadly defined to encompass any device having one or more processing elements, which execute program instructions from memory 108. Moreover, different subsystems of the AR system 100 (e.g., imaging device 110, display device 112, user input device 114) may include processor or logic elements suitable for carrying out at least a portion of the steps described throughout the present disclosure. Therefore, the above description should not be interpreted as a limitation on the present disclosure but merely an illustration.

The memory 108 may include any storage medium known in the art suitable for storing program instructions executable by the associated one or more processors 106, the data/images received from the imaging devices 110, and images/coordinate systems generated by the controller 104. For example, the memory 108 may include a non-transitory memory medium. For instance, the memory 108 may include, but is not limited to, a read-only memory (ROM), a random-access memory (RAM), a magnetic or optical memory device (e.g., disk), a magnetic tape, a solid-state drive and the like. It is further noted that memory 108 may be housed in a common controller housing with the one or more processors 106. In an alternative embodiment, the memory 108 may be located remotely with respect to the physical location of the processors 106, controller 104, and the like. In another embodiment, the memory 108 maintains program instructions for causing the one or more processors 106 to carry out the various steps described through the present disclosure.

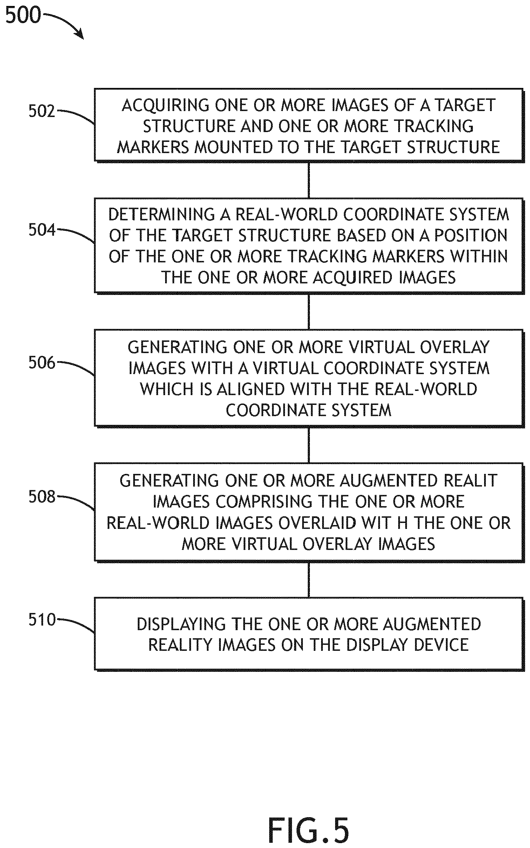

FIG. 5 illustrates a flowchart of a method 500 for operating an augmented reality (AR) system, in accordance with one or more embodiments of the present disclosure. It is noted herein that the steps of method 500 may be implemented all or in part by AR system 100. It is further recognized, however, that the method 500 is not limited to the AR system 100 in that additional or alternative system-level embodiments may carry out all or part of the steps of method 500.

In a step 502, one or more images of a target structure and one or more tracking markers mounted to the target structure are acquired. For example, the controller 104 may be configured to generate one or more control commands configured to cause the imaging device 110 to acquire one or more images of the target structure 116 and/or AR tracking assembly 118. Upon identifying the one or more tracking markers 122 of the tracking assembly 118 in the acquired images, the controller 104 may be configured to "lock on" to the tracking markers 122 in that it may direct the imaging device 110 to regularly and/or consistently acquire images of the tracking markers 122. The controller 104 may then receive the images acquired by the imaging device 110, and store the images in memory 108.

In a step 504, determining a real-world coordinate system of the target structure based on a position of the one or more tracking markers within the one or more acquired images. In some embodiments, the controller 104 may be configured to determine the real-world coordinate system of the target structure 116 based on a determined position and/or orientation of the imaged tracking markers 122. For example, the controller 104 may be configured to determine a known position and/or orientation of the tracking markers 122 relative to the user device 102 and/or target structure 116 based on the acquired images of the tracking marker 122. The position and/or orientation of the tracking markers 122 may be determined by the controller 104 based on a position and/or orientation of the tracking markers 122 relative to one or more components of the target structure 116. Accordingly, the controller 104 may be configured to determine the real-world coordinate system by identifying two or more consistent structural locations (e.g., tracking markers 122, components of the target structure 116) of the target structure 116.

In a step 506, generating one or more virtual overlay images with a virtual coordinate system which is aligned with the real-world coordinate system. The one or more virtual overlay images may be configured to display information associated with the target structure 116. In embodiments, the controller 104 may be configured to generate the virtual overlay images such that the virtual coordinate system is aligned with the real-world coordinate system. In this regard, the virtual coordinate system may also include a 3D coordinate system which corresponds (e.g., maps to, aligns with) the 3D coordinate system of the real-world coordinate system.

In a step 508, generating one or more augmented reality images comprising the one or more real-world images overlaid with the one or more virtual overlay images. In embodiments, the controller 104 may be configured to generate one or more AR images 160, and cause the display device 112 to display the AR images 160. In embodiments, the AR images 160 may include the one or more real-world images 140 overlaid with the one or more virtual overlay images 150. For example, as shown in FIG. 4, the controller 104 may be configured to cause the display device 112 to display the one or more AR images 160 including the virtual overlay images 140 and real-world images 150. In this regard, the controller 104 may be configured to cause the display device 112 to display the real-world images acquired by the imaging device 110 and the generated virtual overlay images simultaneously.

In a step 510, displaying the one or more augmented reality images on the display device. For example, as shown in FIG. 4, the controller 104 may be configured to cause the display device 112 to display the one or more AR images 160.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. An augmented reality, AR, system, comprising:
a target structure (116);
at least one augmented reality tracking assembly (118) comprising:
one or more tracking markers (122); and
a mounting bracket (120) configured to couple the one or more tracking markers to the target structure in a known position and orientation; and
a user device (102) comprising:
an imaging device (110) configured to acquire one or more images of the target structure and the one or more tracking markers;
a display device (112) configured to display images to a user; and
a controller (104) including one or more processors (106) configured to execute a set of program instructions stored in memory (108), the set of program instructions configured to cause the one or more processors to:
receive the one or more acquired images from the imaging device;
determine a real-world coordinate system of the target structure based on a position of the one or more tracking markers within the one or more acquired images;
generate one or more virtual overlay images with a virtual coordinate system which is aligned with the real-world coordinate system;
generate one or more augmented reality images comprising the one or more real-world images overlaid with the one or more virtual overlay images; and
display the one or more augmented reality images on the display device.

2. The AR system of Claim 1, wherein the controller is configured to determine the real-world coordinate system of the target structure by:
retrieving three-dimensional, 3D, design data of the target structure from memory; and
determining a position and an orientation of the 3D design data of the target structure based on an orientation of the one or more tracking markers.

3. The AR system of Claim 2, wherein the controller is configured to determine the position and orientation of the 3D design data of the target structure based on an orientation of the one or more tracking markers with respect to an orientation of one or more components of the target structure.

4. The AR system of Claim 2 or 3, wherein the 3D design data of the target structure includes 3D design data of the one or more tracking markers coupled to the target structure.

5. The AR system of any preceding Claim, wherein the real-world coordinate system and the virtual coordinate system each comprise three-dimensional, 3D, coordinate systems.

6. The AR system of any preceding Claim, wherein the one or more images acquired by the imaging device comprise a video stream acquired over a time interval, and wherein the one or more augmented reality images displayed on the display device comprise an augmented reality video stream displayed over the time interval.

7. The AR system of any preceding Claim, the user device comprising at least one of a smartphone, tablet, or head-mounted device, HMD.

8. The AR system of any preceding Claim, the target structure comprising an aircraft seat.

9. The AR system of any preceding Claim, wherein the one or more virtual overlay images are configured to display information associated with the target structure.

10. The AR system of any preceding Claim, wherein the one or more virtual overlay images include a set of work instructions associated with the target structure.

11. The AR system of Claim 10, wherein the controller is further configured to:
receive one or more user commands; and
generate one or more control signals configured to selectively modify the set of work instructions displayed on the display device.

12. The AR system of any preceding Claim, wherein the one or more user commands comprise at least one of a voice command, a user command input via a user input device, or a hand gesture captured by the imaging device.

13. The AR system of any preceding Claim, wherein determining a real-world coordinate system of the target structure based on the position of the one or more tracking images comprises:
receiving a plurality of images of the target structure and one or more tracking markers over a time interval;
determining a plurality of real-world coordinate systems of the target structure throughout the time interval based on the plurality of images; and
determining an average of the plurality of real-world coordinate systems to generate the real-world coordinate system of the target structure over the time interval.

14. The AR system of any preceding Claim, wherein the controller is further configured to:
determine an identity of the target structure based on the one or more tracking markers within the one or more acquired images.

15. A method for displaying augmented reality, AR, images on a user device, the method comprising:
acquiring one or more images of a target structure and one or more tracking markers mounted to the target structure;
determining a real-world coordinate system of the target structure based on a position of the one or more tracking markers within the one or more acquired images;
generating one or more virtual overlay images with a virtual coordinate system which is aligned with the real-world coordinate system;
generating one or more augmented reality images comprising the one or more real-world images overlaid with the one or more virtual overlay images; and
displaying the one or more augmented reality images on the display device.
